# EUROPEAN PATENT APPLICATION

(11) **EP 3 305 565 A1**
(43) Date of publication of application: **11.04.2018**
(21) Application number: 15893375.4
(22) Date of filing: 28.05.2015
(51) Int. Cl.: B60H 1/08

(54) **VEHICULAR AIR-CONDITIONING SYSTEM**

(71) Applicant: Nissan Motor Co., Ltd., Yokohama-shi, Kanagawa 221-0023 (JP)
(72) Inventor: TEZUKA, Atsushi, Atsugi-shi Kanagawa 243-0123 (JP); TAHARA, Masahiko, Atsugi-shi Kanagawa 243-0123 (JP); KOIKE, Tomoyuki, Atsugi-shi Kanagawa 243-0123 (JP); WATANABE, Munemitsu, Atsugi-shi Kanagawa 243-0123 (JP); TSUCHIYA, Terumasa, Atsugi-shi Kanagawa 243-0123 (JP); KOISHI, Akifumi, Atsugi-shi Kanagawa 243-0123 (JP)
(74) Representative: Osha Liang
(86) International application number: PCT/JP2015/065440
(87) International publication number: WO 2016/189741

(57) **Abstract**

An vehicle air-conditioning system that performs air heating by utilizing heat of a coolant that cools an engine includes a circulation flow passage connecting a coolant inflow portion and a coolant discharge portion of the engine, a heating heater core provided in the circulation flow passage, a radiator provided in the circulation flow passage, and a radiator fan configured to supply an air to the radiator. The vehicle air-conditioning system also includes a control unit configured to control the radiator fan. The control unit drives to rotate the radiator fan during automatic stop of the engine.

## Description

### TECHNICAL FIELD

The present invention relates to a vehicle air-conditioning system that heats the vehicle interior by utilizing heat of a coolant that cools an engine.

### BACKGROUND ART

JP2007-120380A discloses a vehicle air-conditioning system that performs heating by utilizing heat of coolant (cooling liquid) that cools an engine. In this vehicle air-conditioning system, the coolant flows in a radiator circulation flow passage and a heater circulation flow passage. A radiator configured to release heat of the coolant and a water pump configured to pressure-feed the coolant are provided in the radiator circulation flow passage. The water pump is a mechanical pump to be driven on the basis of rotation drive force of a crankshaft of the engine.

### SUMMARY OF INVENTION

In the vehicle air-conditioning system described above, the coolant is pressure-fed by using the water pump to be driven by the engine power. Thus, when the engine is stopped, a flow of the coolant is also stopped. Therefore, at the time of automatic stop of the engine such as idling stop or coast stop, the coolant cannot be supplied to a heating heater core. When the automatic stop of the engine is continued, a temperature of the heater core is lowered.

In order to solve this problem, it is thought that the coolant is supplied to the heater core by providing an electric water pump in the radiator circulation flow passage and driving the electric water pump at the time of the automatic stop of the engine. In this case, since the electric water pump is provided in addition to the mechanical water pump, manufacturing cost is increased. Since the number of constituent parts of the vehicle air-conditioning system is increased due to addition of the electric water pump, a layout property is also deteriorated.

An object of the present invention is to provide a vehicle air conditioning system capable of circulating coolant during automatic stop of an engine with a relatively simple configuration.

According to an aspect of the present invention, a vehicle air-conditioning system that performs air heating by utilizing heat of a coolant that cools an engine is provided. The vehicle air-conditioning system includes a circulation flow passage connecting a coolant inflow portion and a coolant discharge portion of the engine, a heating heater core provided in the circulation flow passage, a radiator provided in the circulation flow passage, and a radiator fan configured to supply an air to the radiator. The vehicle air-conditioning system also includes a control unit configured to control the radiator fan. The control unit drives to rotate the radiator fan during automatic stop of the engine.

### BRIEF DESCRIPTION OF DRAWINGS

[Fig. 1] Fig. 1 is a schematic configuration diagram of a vehicle air-conditioning system according to a first embodiment of the present invention.
[Fig. 2] Fig. 2 is an exploded perspective view of the vehicle air-conditioning system.
[Fig. 3] Fig. 3 is an enlarged view of part of a radiator forming the vehicle air-conditioning system.
[Fig. 4] Fig. 4 is a flowchart showing radiator fan control at the time of automatic stop of an engine to be executed by a controller of the vehicle air-conditioning system.
[Fig. 5] Fig. 5 is a view for illustrating a flow of the coolant at the time of execution of the radiator fan control.
[Fig. 6A] Fig. 6A is a view showing one example of a relationship between a temperature of coolant and a volume of the air passing through a radiator in radiator fan control to be executed by a controller of a vehicle air-conditioning system according to a second embodiment.
[Fig. 6B] Fig. 6B is a view showing another example of the relationship between the temperature of the coolant and the volume of the air passing through the radiator in the radiator fan control.
[Fig. 7A] Fig. 7A is a view showing one example of a relationship between a temperature of a blower air and the volume of the air passing through the radiator in the radiator fan control to be executed by the controller of the vehicle air conditioning system according to the second embodiment.
[Fig. 7B] Fig. 7B is a view showing another example of the relationship between the temperature of the blower air and the volume of the air passing through the radiator in the radiator fan control.

### DESCRIPTION OF EMBODIMENTS

Hereinafter, embodiments of the present invention will be described with reference to the drawings, etc.

### (First Embodiment)

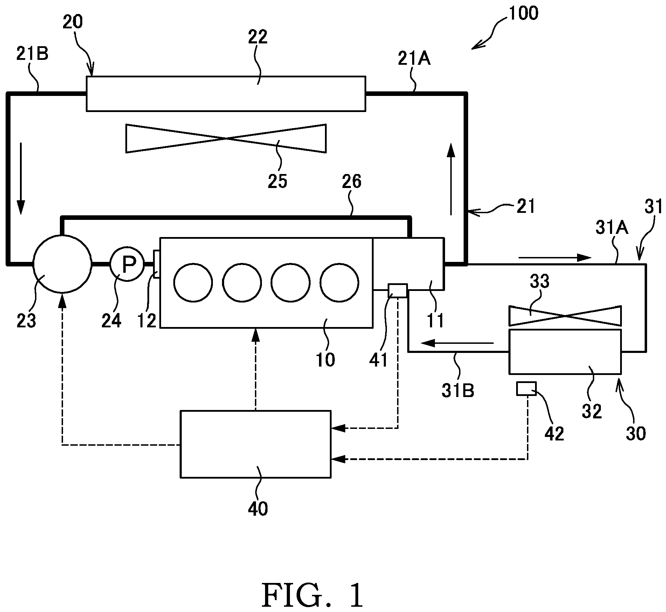

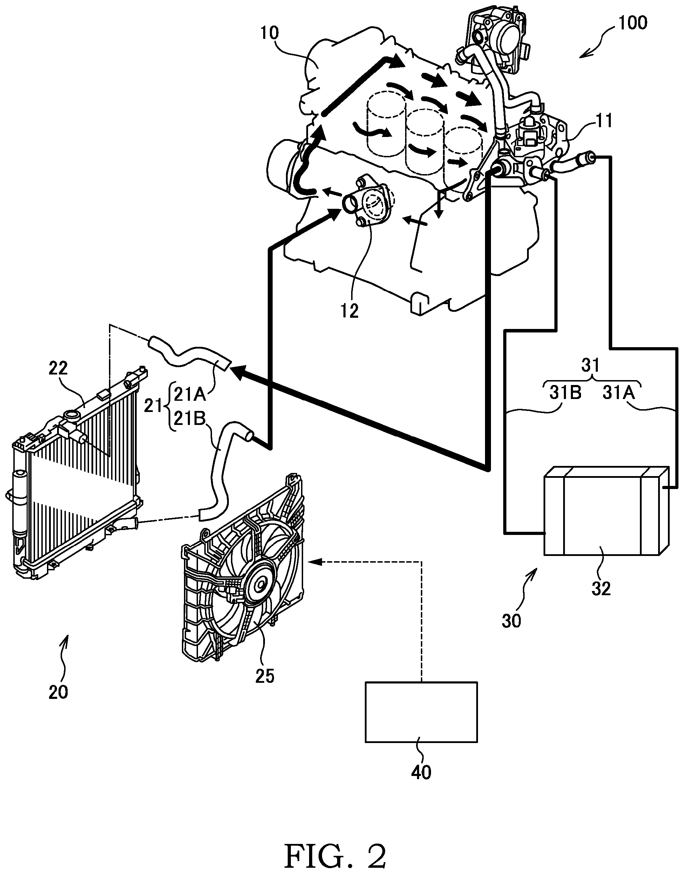

With reference to Figs. 1 and 2, a configuration of a vehicle air-conditioning system 100 according to a first embodiment will be described. Fig. 1 is a schematic configuration diagram of the air-conditioning system 100. Fig. 2 is an exploded perspective view of the air-conditioning system 100.

The vehicle air-conditioning system 100 shown in Figs. 1 and 2 is a system that heats the vehicle interior (a passenger compartment of the vehicle) by utilizing heat of coolant (cooling liquid) that cools an engine 10, the system being disposed in an engine room of a vehicle, for example.

As shown in Figs. 1 and 2, the air-conditioning system 100 includes the engine 10, a cooling device 20 configured to cool the engine 10 using the coolant, a heating device 30 configured to heat the vehicle interior by utilizing the heat of the coolant discharged from the engine 10, and a controller 40 configured to comprehensively control the air-conditioning system 100.

The engine 10 is a four-cylinder internal combustion engine arranged in the engine room of the vehicle. A water jacket through which the coolant passes is formed in a cylinder block and a cylinder head of the engine 10. The engine 10 is cooled by the coolant passing through the water jacket.

As shown in Fig. 1, the cooling device 20 includes a circulation flow passage 21, a radiator 22, a control valve 23, a water pump 24, a radiator fan 25, and a bypass flow passage 26.

The circulation flow passage 21 is a passage through which the coolant flows, the passage connecting a coolant discharge portion 11 and a coolant inflow portion 12 of the engine 10. The circulation flow passage 21 includes an upstream side flow passage 21A and a downstream side flow passage 21B.

One end of the upstream side flow passage 21A is connected to the coolant discharge portion 11 of the engine 10, and the other end of the upstream side flow passage 21A is connected to an upper portion of the radiator 22 (see Fig. 2). Meanwhile, one end of the downstream side flow passage 21B is connected to the coolant inflow portion 12 of the engine 10, and the other end of the downstream side flow passage 21B is connected to a lower portion of the radiator 22 (see Fig. 2).

The radiator 22 is a device configured to release the heat of the coolant, and the radiator fan 25 is arranged on the front side of the radiator 22. The radiator fan 25 is an electric fan to be driven and rotated on the basis of electric power supplied from a battery, etc. By rotation of the radiator fan 25, the air (cooling air flow) is supplied to the radiator 22. An operation of the radiator fan 25 is controlled by the controller 40.

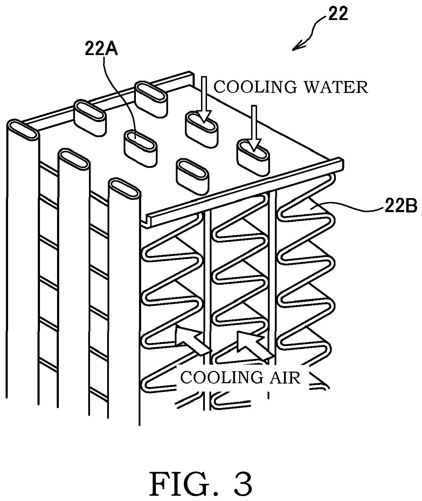

As shown in Fig. 3, the radiator 22 includes a plurality of pipes 22A through which the coolant flows from the upper portion of the radiator 22 toward the lower portion of the radiator 22, and wave shaped fins 22B arranged between the adjacent pipes 22A. The coolant discharged from the engine 10 and flowing into the pipes 22A of the radiator 22 is cooled by the air passing through the fins 22B. In the present embodiment, the radiator 22 is a corrugated fin radiator. However, the radiator may be other radiators such as a plate fin radiator.

Returning to Fig. 1, the cooling device 20 will be further described.

The coolant cooled by the radiator 22 is guided to the coolant inflow portion 12 of the engine 10 through the downstream side flow passage 21B. The water pump 24 configured to pressure-feed the coolant is provided in the downstream side flow passage 21B. The water pump 24 is a mechanical pump to be driven on the basis of rotation drive force of a crankshaft of the engine 10. Therefore, the water pump 24 is brought into a driven state in a case where the engine 10 is being operated and the crankshaft is being rotated, and into a non-driven state when the engine 10 is stopped and rotation of the crankshaft is stopped.

The cooling device 20 has the bypass flow passage 26 through which the coolant discharged from the engine 10 is guided to the downstream side flow passage 21B without going through the radiator 22 at the time of cold start of the engine 10, etc. One end of the bypass flow passage 26 is connected to the coolant discharge portion 11 of the engine 10, and the other end of the bypass flow passage 26 is connected to the downstream side flow passage 21B via the control valve 23.

The control valve 23 is a flow rate adjusting valve capable of adjusting a flow rate of the coolant flowing through the circulation flow passage 21 and a flow rate of the coolant flowing through the bypass flow passage 26. The control valve 23 is for example a thermostat and is controlled by the controller 40.

At the time of the cold start of the engine, etc., the control valve 23 adjusts the flow of the coolant in such a manner that the coolant does not flow into the radiator 22 but passes through the bypass flow passage 26. Meanwhile, when a temperature of the coolant becomes equal to or higher than a predetermined temperature, the control valve 23 controls the flow of the coolant in such a manner that the coolant passes through the radiator 22. The temperature of the coolant is detected by a temperature sensor 41 (liquid temperature detection unit) provided in the coolant discharge portion 11 of the engine 10.

Next, the heating device 30 configured to heat the vehicle interior by sharing the coolant and utilizing the heat of the coolant will be described.

As shown in Figs. 1 and 2, the heating device 30 includes a circulation flow passage 31, a heater core 32 (a heating heater core) provided in the circulation flow passage 31, and a blower fan 33 (see Fig. 1) configured to supply the air (blower air) to the heater core 32.

As shown in Fig. 1, the circulation flow passage 31 includes a first flow passage 31A branching from the upstream side flow passage 21A and being connected to one end of the heater core 32, and a second flow passage 31B connected to the other end of the heater core 32 and the coolant discharge portion 11 of the engine 10.

The blower fan 33 is an electric fan to be driven and rotated on the basis of the electric power supplied from the battery, etc. By rotation of the blower fan 33, the blower air (a blower air flow) is supplied to the heater core 32.

The heater core 32 for an air heating is a heat exchanger configured to heat the blower air (the blower air flow) supplied from the blower fan 33 with the heat of the coolant discharged from the engine 10. The heater core 32 and the blower fan 33 are arranged in an air conditioner duct, and the heated blower air is supplied to the vehicle interior upon a heating request. By guiding the blower air to the vehicle interior in such a way, the vehicle interior is heated. A temperature of the blower air (the blower air flow) is detected by a temperature sensor 42 (air temperature detection unit) arranged in the air conditioner duct.

As described above, the vehicle air-conditioning system 100 according to the present embodiment is formed in such a manner that the coolant is circulated through both the cooling device 20 and the heating device 30.

The controller 40 of the air-conditioning system 100 includes a microcomputer including a central processing unit (CPU), a read-only memory (ROM), a random access memory (RAM), and an input/output interface (I/O interface). Not only detection signals of the temperature sensors 41, 42 but also output signals of various sensors required for properly controlling the air-conditioning system 100 such as accelerator pedal sensor, a brake pedal sensor, and a vehicle speed sensor are inputted to the controller 40.

The controller 40 is programmed to execute idling stop control, coast stop control, etc. on the basis of these signals.

The idling stop control is a control of automatically stopping the engine when a predetermined engine stoppage condition is established at the time of vehicle stop, and then re-starting the engine when a predetermined engine re-start condition is established. The coast stop control is a control of automatically stopping the engine when a predetermined engine stoppage condition is established at the time of coasting of the vehicle, and then re-starting the engine when a predetermined engine re-start condition is established. The idling stop control is also a control of stopping the engine for improving fuel consumption. However, the idling stop control is different from the coast stop control in a point that the idling stop control is done under the condition that the vehicle is stopped (vehicle speed is zero), whereas the coast stop control is done under the condition of coasting that the vehicle speed is greater than zero and equal to or lower than predetermined speed.

In such a way, the engine 10 constituting part of the air-conditioning system 100 of the present embodiment has a function of automatically stopping the engine 10 under a predetermined stoppage condition and then automatically re-starting the engine 10 under a predetermined re-start condition.

Further, on the basis of the various signals described above, the controller 40 is programmed to execute engine cooling control of controlling a cooling state of the engine 10 and heating control based on a heating request of a driver, etc. In the engine cooling control and the heating control, operations of the control valve 23, the radiator fan 25, and the blower fan 33 are controlled by the controller 40.

The air-conditioning system 100 adopts the mechanical water pump 24 as a means configured to pressure-feed the coolant as well as conventional methods. Thus, when the engine 10 is stopped by the idling stop control, etc., the operation of the water pump 24 is also stopped.

When the water pump is stopped in such a way, in the conventional methods, the high-temperature coolant discharged from the engine cannot be supplied to the heater core and heating performance of the heating device is decreased.

With the air-conditioning system 100 according to the present embodiment, the controller 40 is programmed to excute radiator fan control at the time of automatic stop of the engine in order to suppress the decrease in the heating performance during automatic stop of the engine.

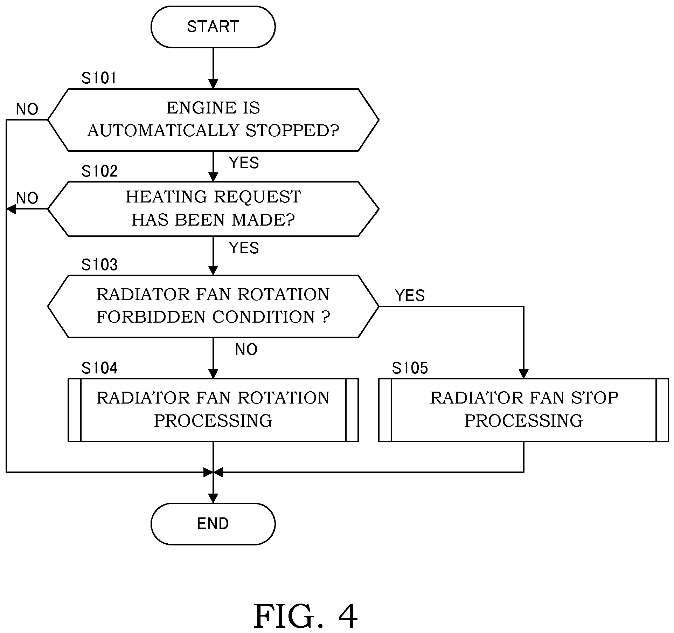

With reference to Fig. 4, the radiator fan control at the time of the automatic stop of the engine to be executed by the controller 40 will be described. This control is repeatedly executed for every predetermined control cycle.

In Step S101, the controller 40 determines whether or not the engine 10 is automatically stopped by the idling stop control or the coast stop control. The controller 40 determines whether or not the engine 10 is automatically stopped on the basis of a parameter relating to a vehicle running state such as an accelerator pedal operation amount, a brake pedal operation amount, and vehicle speed.

In a case where the engine 10 is not automatically stopped, the controller 40 determines that the coolant is supplied to the heater core 32 via the water pump 24 and finishes this control. Meanwhile, in a case where the engine 10 is automatically stopped by the idling stop control, etc., the controller 40 executes the process of Step S102.

In Step S102, the controller 40 determines whether or not the heating request has been made. The controller 40 determines whether or not a heating switch operated by the driver, etc. is in an ON state, and in a case where the heating switch is in the ON state, determines that the heating request has been made. In such a way, the controller 40 functions as a heating request determination unit configured to determine whether or not the heating request has been made.

In a case where the heating switch is in an OFF state and no heating request has been made, the controller 40 determines that there is no need for suppressing the decrease in the heating performance, and finishes this control. Meanwhile, in a case where the heating request has been made, the controller 40 determines that there is a need for suppressing the decrease in the heating performance during the automatic stop of the engine, and executes the process of Step S103.

In Step S103, the controller 40 determines whether or not a radiator fan rotation forbidden condition is established. The radiator fan rotation forbidden condition is a condition for determining whether the heating performance during the automatic stop of the engine is to be in a state that it is not possible to satisfy the heating request.

In a case where the temperature of the coolant detected by the temperature sensor 41 is equal to or lower than a lower limit liquid temperature (such as 50°C), or in a case where the temperature of the blower air detected by the temperature sensor 42 is equal to or lower than a lower limit air temperature (such as 40°C), the controller 40 determines that the radiator fan rotation forbidden condition is met. In a case where the temperature of the coolant is equal to or lower than the lower limit water temperature and the temperature of the blower air is equal to or lower than the lower limit air temperature, the controller 40 may also determine the radiator fan rotation forbidden condition is met.

When the radiator fan rotation forbidden condition is not met, the controller 40 determines that the heating performance during the automatic stop of the engine can be maintained, and executes the process of Step S104. Meanwhile, when the radiator fan rotation forbidden condition is met, the controller 40 determines that the heating performance cannot be maintained during the automatic stop of the engine, and executes the process of Step S105.

In Step S104, the controller 40 executes radiator fan rotation processing. In the radiator fan rotation processing, the controller 40 drive to rotate the radiator fan 25 in such a manner that the air is supplied to the radiator 22 by the preliminarily fixed volume. At this time, the controller 40 controls the control valve 23 in such a manner that the bypass flow passage 26 is closed, that is, the coolant is forbidden from flowing into the bypass flow passage 26 (see Fig. 1).

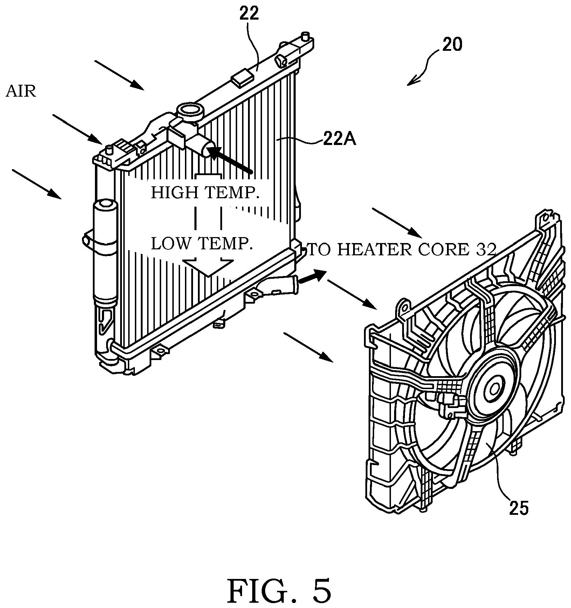

With reference to Fig. 5, operations when the radiator fan 25 is driven and rotated during the automatic stop of the engine will be described.

During the automatic stop of the engine, the operation of the water pump 24 (see Fig. 1) is stopped. Thus, the water pump 24 does not function as a device configured to pressure-feed the coolant. However, in the air-conditioning system 100 according to the present embodiment, by driving and rotating the radiator fan 25 during the automatic stop of the engine, the coolant is supplied to the heater core 32 of the heating device 30.

When the radiator fan 25 is driven and rotated during the automatic stop of the engine, as shown by thin arrows of Fig. 5, the air in accordance with a rotation amount of the radiator fan 25 is supplied to the radiator 22. When the cooling air flow is supplied to the radiator 22, the coolant in the radiator 22 is cooled. When the coolant is cooled and the temperature of the coolant is lowered, density of the coolant is increased. Thus, the coolant in the radiator 22 is moved from the upper portion of the radiator 22 toward the lower portion through the pipes 22A.

In such a way, by cooling the radiator 22 with the cooling air flow and forcibly letting convection take place in the coolant in the radiator 22, a coolant downward flow running from the upper portion of the radiator toward the lower portion can be formed in the radiator 22. In the air-conditioning system 100 according to the present embodiment, the coolant downward flow becomes a flowage source that lets the coolant flow.

Therefore, in the air-conditioning system 100, although the temperature of the coolant is slightly lowered in the radiator 22 by executing the radiator fan rotation control, the relatively-high-temperature coolant passing through the engine 10 can be supplied to the heater core 32 through the circulation flow passage 31 (see Fig. 1).

As shown in Fig. 4, after executing the process of Step S104, the controller 40 once finishes the radiator fan control at the time of the automatic stop of the engine.

Meanwhile, when it is determined that the radiator fan rotation forbidden condition is met in Step S103, the controller 40 executes radiator fan stop processing in Step S105. In the radiator fan stop processing, the controller 40 stops the operation of the radiator fan 25, and stops supply of the cooling air flow to the radiator 22. After executing the process of Step S105, the controller 40 once finishes the radiator fan control at the time of the automatic stop of the engine. As shown in Steps S104 and S105, the controller 40 functions as a control unit configured to control the operation of the radiator fan 25.

With the vehicle air-conditioning system 100 of the first embodiment described above, the following effects can be obtained.

The air-conditioning system 100 includes the circulation flow passage 21 connecting the coolant inflow portion 12 and the coolant discharge portion 11 of the engine 10, the heating heater core 32 provided in the circulation flow passage 31, the radiator 22 provided in the circulation flow passage 21, the radiator fan 25 configured to supply the air to the radiator 22, and the controller 40 programmed to control the system. The controller 40 determines whether or not the heating request has been made during the automatic stop of the engine. The controller 40 drives to rotate the radiator fan 25 when the heating request has been made during the automatic stop of the engine.

In such a way, by cooling the radiator 22 with the cooling air flow during the automatic stop of the engine 10 and forcibly letting convection generate in the coolant in the radiator 22, even when the water pump 24 is in a stop state, the relatively-high-temperature coolant can be supplied to the heater core 32. Thereby, the heater core 32 can be heated by the coolant, and a temperature of the heater core 32 can be suppressed from lowering during the automatic stop of the engine. As a result, the temperature of the blower air (the blower air flow) in the heating device 30 can be suppressed from lowering, and the decrease in the heating performance during the automatic stop of the engine can be suppressed. Therefore, the automatic stop of the engine 10 can be continued while maintaining the heating performance, so that fuel consumption performance of the engine 10 can be enhanced.

Further, the air-conditioning system 100 is a device configured to drive the existing radiator fan 25 provided together with the radiator 22 during the automatic stop of the engine. Thus, there is no need for newly adding a system configuration and the configuration can be simplified.

The circulation flow passage 21 of the cooling device 20 has the upstream side flow passage 21A connected to the upper portion of the radiator 22, and the downstream side flow passage 21B connected to the lower portion of the radiator 22. The radiator 22 includes a plurality of pipes 22A through which the coolant flows from the upper portion of the radiator 22 toward the lower portion of the radiator 22. With such a configuration, by cooling the radiator 22 with the cooling air flow, the coolant downward flow can be efficiently formed in the radiator 22. Thereby, even when the water pump 24 is in the stop state during the automatic stop of the engine, the relatively-high-temperature coolant can be reliably supplied to the heater core 32.

Even when the heating request has been made during the automatic stop of the engine but in a case where the predetermined stoppage condition is met, the controller 40 of the air-conditioning system 100 stops the operation of the radiator fan 25. More specifically, in a case where the temperature of the coolant is equal to or lower than the lower limit liquid temperature or in a case where the temperature of the blower air is equal to or lower than the lower limit air temperature, the controller 40 is programmed to determine that the predetermined stoppage condition is met, and stop the operation of the radiator fan 25. Thereby, when the heating performance is a state that it is not possible to satisfy the heating request during the automatic stop of the engine, etc., useless operation of the radiator fan 25 can be avoided. As a result, an extra energy loss in the air-conditioning system 100 can be suppressed.

The air-conditioning system 100 includes the mechanical water pump 24 to be driven on the basis of the power of the engine 10 as a device configured to pressure-feed the coolant. Therefore, when the engine 10 is not automatically stopped, the water pump 24 is driven by using the power of the engine. Thus, the coolant can be efficiently circulated.

### (Second Embodiment)

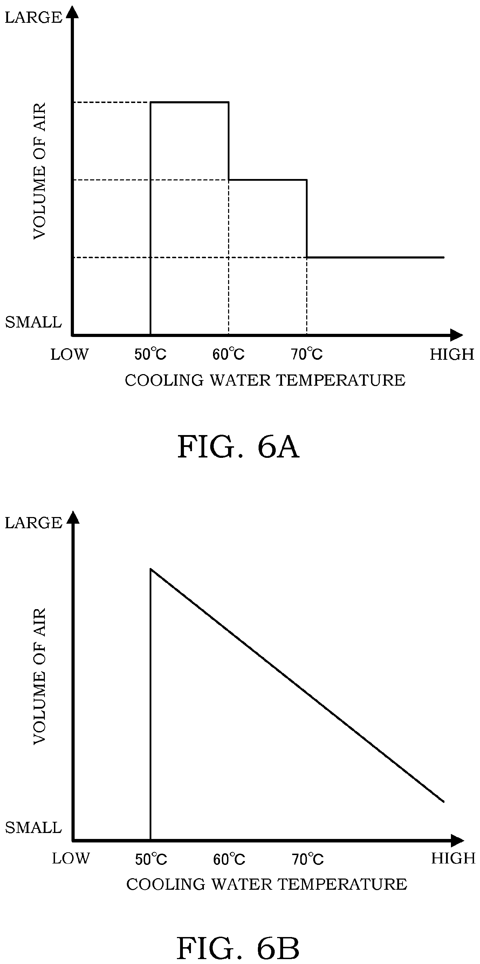

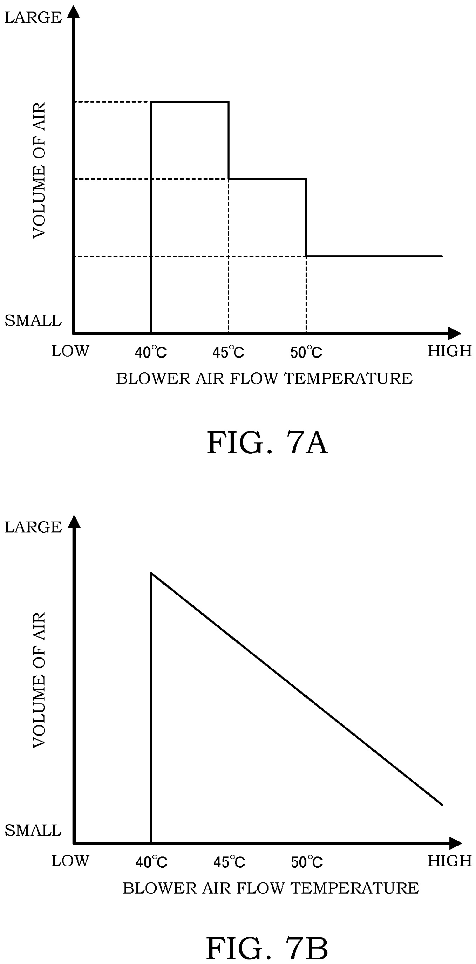

With reference to Figs. 6A, 6B, 7A, and 7B, an air-conditioning system 100 according to a second embodiment of the present invention will be described. In the following embodiment, the same reference signs will be used for configurations having the same functions as the first embodiment, and duplicated description will be appropriately omitted.

In the air-conditioning system 100 according to the first embodiment, the controller 40 drives to rotate the radiator fan 25 in such a manner that the air is supplied to the radiator 22 by the fixed volume in Step S104. Meanwhile, in the air-conditioning system 100 according to the second embodiment, a controller 40 adjusts the volume of the air supplied to a radiator 22 on the basis of a parameter relating to heating performance in Step S104.

For example, as shown in Fig. 6A, the controller 40 adjusts the volume of the air supplied to the radiator 22 on the basis of a temperature of coolant in a heating device 30. The temperature of the coolant is a temperature detected by a temperature sensor 41 (see Fig. 1) during automatic stop of an engine.

As shown in Fig. 6A, in a case where the temperature of the coolant during the automatic stop of the engine is higher than a preliminarily fixed highest liquid temperature (such as 70°C), the controller 40 controls a rotation amount of a radiator fan 25 in such a manner that the volume of the air becomes the minimum volume of the air. In a case where the temperature of the coolant is higher than a preliminarily fixed intermediate liquid temperature (such as 60°C) and equal to or lower than the highest liquid temperature, the controller 40 controls the rotation amount of the radiator fan 25 in such a manner that the volume of the air becomes the intermediate volume of the air which is greater than the minimum volume of the air. Further, in a case where the temperature of the coolant is higher than a preliminarily fixed lowest liquid temperature (such as 50°C) and equal to or lower than the intermediate liquid temperature, the controller 40 controls the rotation amount of the radiator fan 25 in such a manner that the volume of the air becomes the maximum volume of the air which is greater than the intermediate volume of the air.

In a case where the temperature of the coolant is equal to or lower than the lowest liquid temperature, the controller 40 stops an operation of the radiator fan 25, and stops supply of a cooling air flow to the radiator 22. The determination on whether or not the temperature of the coolant is equal to or lower than the lowest liquid temperature is performed in the process of S103 of Fig. 4. Therefore, the lowest liquid temperature of the coolant is the same temperature as the lower limit liquid temperature used for determination of S103.

In the air-conditioning system 100 according to the second embodiment, the controller 40 controls the radiator fan 25 in such a manner that the more the temperature of the coolant is lowered, the more the volume of the air supplied to the radiator 22 is increased stepwise until the temperature reaches the lowest liquid temperature (lower limit liquid temperature). By controlling in such a way, in a case where the temperature of the coolant is lowered, a circulation flow rate of the coolant can be increased. As a result, even when the temperature of the coolant is lowered during the automatic stop of the engine, efficiency of heat exchange between the coolant and the heater core 32 can be enhanced. Thus, a decrease in the heating performance of the heating device 30 can be suppressed. Therefore, the automatic stop of the engine can be continued for a long time while maintaining the heating performance, so that fuel consumption performance of the engine 10 can be more enhanced.

As described above, the controller 40 controls the operation of the radiator fan 25 on the basis of a coolant temperature-volume of air characteristic of Fig. 6A. However, the controller 40 may control the operation of the radiator fan 25 on the basis of a coolant temperature-volume of air characteristic of Fig. 6B. In a case where the characteristic of Fig. 6B is utilized, the controller 40 controls the radiator fan 25 in such a manner that the more the temperature of the coolant is lowered, the more the volume of the air supplied to the radiator 22 is continuously increased until the temperature reaches the lowest liquid temperature (lower limit liquid temperature).

Further, the controller 40 may control the operation of the radiator fan 25 on the basis of a blower air temperature-volume of air characteristic shown in Fig. 7A. In this case, as shown in Fig. 7A, the controller 40 adjusts the volume of the air supplied to the radiator 22 on the basis of a temperature of a blower air flowing in an air conditioner duct. The temperature of the blower air is a temperature detected by a temperature sensor 42 (see Fig. 1) during the automatic stop of the engine.

As shown in Fig. 7A, in a case where the temperature of the blower air during the automatic stop of the engine is higher than a preliminarily fixed highest air temperature (such as 50°C), the controller 40 controls the rotation amount of the radiator fan 25 in such a manner that the volume of the air becomes the minimum volume of the air. In a case where the temperature of the blower air is higher than a preliminarily fixed intermediate air temperature (such as 45°C) and equal to or lower than the highest air temperature, the controller 40 controls the rotation amount of the radiator fan 25 in such a manner that the volume of the air becomes the intermediate volume of the air which is greater than the minimum volume of the air. Further, in a case where the temperature of the blower air is higher than a preliminarily fixed lowest air temperature (such as 40°C) and equal to or lower than the intermediate air temperature, the controller 40 controls the rotation amount of the radiator fan 25 in such a manner that the volume of the air becomes the maximum volume of the air which is greater than the intermediate volume of the air.

In a case where the temperature of the blower air is equal to or lower than the lowest air temperature, the controller 40 stops the operation of the radiator fan 25, and stops the supply of the cooling air flow to the radiator 22. The determination on whether or not the temperature of the blower air is equal to or lower than the lowest air temperature is performed in the process of S103 of Fig. 4. Therefore, the lowest air temperature of the blower air is the same temperature as the lower limit air temperature used for determination of S103.

In such a way, the controller 40 controls the radiator fan 25 in such a manner that the more the temperature of the blower air is lowered, the more the volume of the air supplied to the radiator 22 is increased stepwise until the temperature reaches the lowest air temperature (lower limit air temperature). By controlling in such a way, in a case where the temperature of the blower air is lowered, the circulation flow rate of the coolant can be increased. As a result, the efficiency of the heat exchange between the coolant and the heater core 32 can be enhanced. Thus, the decrease in the heating performance of the heating device 30 can be suppressed. Therefore, the automatic stop of the engine can be continued for a long time while maintaining the heating performance, so that the fuel consumption performance of the engine 10 can be more enhanced.

The controller 40 may control the operation of the radiator fan 25 on the basis of a blower air temperature-volume of air characteristic of Fig. 7B. In a case where the characteristic of Fig. 7B is utilized, the controller 40 controls the radiator fan 25 in such a manner that the more the temperature of the blower air is lowered, the more the volume of the air supplied to the radiator 22 is continuously increased until the temperature reaches the lowest air temperature (lower limit air temperature).

The embodiments of the present invention are described above. However, the above embodiments do not intend to limit the technical scope of the present invention to the specific configurations of the above embodiments but only show part of application examples of the present invention.

Although the controller 40 executes the radiator fan control shown in Fig. 4 in the air-conditioning system 100 according to the first embodiment, the processes of Steps S102, S103, and S105 in the flowchart of Fig. 4 can be appropriately omitted. In a case where there processes of Steps S102, S103, and S 105 are omitted, the controller 40 starts drive and rotation of the radiator fan 25 at timing when the engine 10 is automatically stopped. That is, the controller 40 drive to rotate the radiator fan 25 during the automatic stop of the engine irrespective of the heating request. Even when the air-conditioning system 100 is configured in such a way, the coolant can be supplied to the heater core 32 during the automatic stop of the engine.

In the first and second embodiments, the heater core 32 is arranged in the circulation flow passage 31 branching from the circulation flow passage 21. However, the circulation flow passage 31 may be omitted in the air-conditioning system 100 and the heater core 32 may be arranged in the circulation flow passage 21.

In the second embodiment, the controller 40 adjusts the volume of the air supplied to the radiator 22 on the basis of the temperature of the coolant or the temperature of the blower air in Step S104. However, the controller 40 may adjust the volume of the air supplied to the radiator 22 on the basis of both the temperature of the coolant and the temperature of the blower air.

## Claims

1. A vehicle air-conditioning system that performs air heating by utilizing heat of a coolant that cools an engine, comprising:
a circulation flow passage connecting a coolant inflow portion and a coolant discharge portion of the engine;
a heating heater core provided in the circulation flow passage;
a radiator provided in the circulation flow passage;
a radiator fan configured to supply an air to the radiator; and
a control unit configured to control the radiator fan, wherein
the control unit drives to rotate the radiator fan during automatic stop of the engine.

2. The vehicle air-conditioning system according to claim 1, wherein
the circulation flow passage has an upstream side flow passage connected to an upper portion of the radiator, and a downstream side flow passage connected to a lower portion of the radiator, and
the radiator includes a plurality of pipes through which the coolant flows from the upper portion of the radiator toward the lower portion of the radiator.

3. The vehicle air-conditioning system according to claim 1 or 2, further comprising:
a liquid temperature detection unit configured to detect a temperature of the coolant, wherein
the control unit drives to rotate the radiator fan in such a manner that the more the temperature of the coolant is lowered, the more a volume of the air supplied to the radiator is increased.

4. The vehicle air-conditioning system according to any one of claims 1 to 3, further comprising:
an air temperature detection unit configured to detect a temperature of a blower air heated by the heating heater core, wherein
the control unit drives to rotate the radiator fan in such a manner that the more the temperature of the blower air is lowered, the more the volume of the air supplied to the radiator is increased.

5. The vehicle air-conditioning system according to any one of claims 1 to 4, wherein
the control unit stops the radiator fan when a predetermined stoppage condition is met during automatic stop of the engine.

6. The vehicle air-conditioning system according to claim 5, further comprising:
a liquid temperature detection unit configured to detect a temperature of the coolant, wherein
the control unit stops the radiator fan when the temperature of the coolant is equal to or lower than a lower limit liquid temperature.

7. The vehicle air-conditioning system according to claim 5 or 6, further comprising:
an air temperature detection unit configured to detect a temperature of a blower air heated by the heater core, wherein
the control unit stops the radiator fan when the temperature of the blower air is equal to or lower than a lower limit air temperature.

8. The vehicle air-conditioning system according to any one of claims 1 to 7, further comprising:
a mechanical pump to be driven on the basis of power of the engine as a device configured to pressure-feed the coolant of the circulation flow passage.
